# FASCICULE DE BREVET EUROPEEN

(11) **EP 1 371 478 B1**
(45) Date de publication et mention de la délivrance du brevet: **14.04.2010**
(21) Numéro de dépôt: 03016411.5
(22) Date de dépôt: 02.08.2000
(51) Int. Cl.: B29D 30/12, B29C 33/02

(54) **Noyau rigide en deux parties, pour la fabrication de pneumatiques**
Steifer Kern in zwei Teilen, zur Herstellung von Luftreifen
Rigid core in two parts, for manufacturing tires

(30) Priorité: 10.08.1999 FR 9910420
(43) Date de publication de la demande: 17.12.2003
(62) Demande divisionnaire de: 00116695.8
(73) Titulaire: Manufacture Française des Pneumatiques Michelin, 63040 Clermont-Ferrand Cedex 9 (FR)
(72) Inventeur: Ladouce, Jean-Pierre, 1722 Bourguillon (CH); Soulalioux, Alain, 43100 Saint-Beauzire (FR)
(74) Mandataire: Bauvir, Jacques

(56) Documents cités:
- EP-A- 0 893 237
- US-A- 1 389 892
- US-A- 1 810 072

## Description

La présente invention concerne la fabrication des pneumatiques. Plus particulièrement, la présente invention est relative à un noyau sensiblement rigide utilisé comme support de fabrication d'un pneumatique et comme moyen de moulage de la surface de la cavité intérieure d'un pneumatique.

Un tel noyau est connu du document US 1389892

La demande de brevet EP 0 666 165 décrit une machine de fabrication qui utilise un tel noyau comme support de fabrication d'un pneumatique. Un tel noyau est démonté à la fin de chaque fabrication d'un pneumatique, puis est reconstitué pour servir de support pour la fabrication ultérieure d'un autre pneumatique. Un tel noyau doit résister à de nombreux cycles de montage et démontage. Le noyau doit être d'une très grande robustesse afin de pouvoir garantir un haut niveau de qualité géométrique, ainsi qu'une grande pérennité dans le temps des qualités géométriques malgré les nombreuses manipulations dont il est l'objet. Par ailleurs, dans la demande de brevet EP 0 666 165, il est proposé d'utiliser une jante comme organe de solidarisation des différentes fractions dont est constitué nécessairement un tel noyau.

Le problème qui se pose est donc de parvenir à une conception suffisamment robuste d'un tel noyau, sans préjudice d'une part de la facilité de montage et de démontage de ce noyau et également sans rendre son transport de poste en poste sur la machine de fabrication trop compliqué. Par ailleurs, un tel noyau doit être adapté à la forme exacte de chacun des pneumatiques différents qu'il faut fabriquer. Il est également souhaitable qu'il existe une certaine standardisation dans un tel noyau afin que la machine en elle-même soit aussi universelle que possible. Il convient aussi de pouvoir apporter des calories au pneumatique à vulcaniser par le noyau afin que la vulcanisation puisse être aussi homogène et aussi rapide que possible. Enfin, tout en étant aussi robuste que possible et tout en permettant une excellente transmission de calories vers le pneumatique à vulcaniser, un tel noyau se doit d'être aussi léger que possible afin de permettre des accélérations élevées et des vitesses de transport de poste en poste élevées. L'objectif de l'invention est atteint par un noyau rigide selon la revendication 1.

Un tel noyau rigide a pour fonction de définir au moins partiellement une forme de fabrication pour la surface intérieure d'un pneumatique. On sait qu'un tel noyau est constitué de plusieurs fractions afin de pouvoir être extrait de l'intérieur d'un pneumatique par le volume disponible à l'intérieur des bourrelets. Il comporte une pluralité de fractions adjacentes circonférentiellement, disposées côte à côte en contact les unes contre les autres par leurs faces transversales. On entend par « faces transversales » les faces qui vont d'un côté à l'autre du noyau. Dans l'exemple décrit, il s'agit de faces planes, qui sont parallèles à l'axe du noyau, ces caractéristiques n'étant pas limitatives.

Lesdites faces transversales d'au moins une fraction sont convergentes radialement à l'extérieur du noyau.

L'invention propose de réaliser chacune de ces fractions en deux parties distinctes qui répondent chacune à leurs impératifs propres : une partie d'accrochage et une partie principale, solidaire de la partie d'accrochage. La fonction essentielle de la partie principale est le moulage de la surface intérieure du pneumatique. La partie principale sert donc de forme de fabrication et moule la surface intérieure d'un pneumatique. La fonction essentielle de la partie d'accrochage est la solidarisation des différentes fractions à un organe de solidarisation desdites différentes fractions dont est constitué un tel noyau.

Chacune desdites fractions comporte une partie d'accrochage à un organe de solidarisation desdites différentes fractions, ladite partie d'accrochage étant agencée à l'extrémité radialement intérieure de chacune des fractions. Ladite partie d'accrochage est réalisée essentiellement en un premier matériau choisi pour son aptitude à supporter un grand nombre de cycles de montage et de démontage. La partie d'accrochage est conçue de façon à optimiser la prise de chacune des fractions par la jante et par les différents autres organes de manipulation qui peuvent être prévus sur les préhenseurs ou sur chacun des postes d'utilisation du noyau.

Chacune desdites fractions comporte également une partie principale solidaire de ladite partie d'accrochage, réalisée essentiellement en un second matériau différent du premier matériau et choisi pour son aptitude à être moulé et sa bonne conductibilité thermique. La partie principale est rendue solidaire de ladite partie d'accrochage, c'est à dire non démontable fonctionnellement. La partie principale est réalisée de façon à optimiser le moulage et la vulcanisation du pneumatique et également de façon à être aussi économique que possible à réaliser car il s'agit d'une pièce spécifique de chaque dimension du pneumatique, alors que la partie d'accrochage peut être réalisée suivant des plans et une conception identiques pour plusieurs pneumatiques différents.

Remarquons que l'ébauche crue du pneumatique ne peut que très difficilement être fabriquée à la forme exacte que la vulcanisation et le moulage vont lui conférer. Notamment, la partie inférieure du bourrelet peut avoir une section qui ne fait que s'approcher de la section finale. La partie radialement la plus basse du bourrelet peut, à l'état cru, être située à un niveau radial plus faible que ce que l'on obtiendra après le moulage. Il peut en résulter que, lors de la fermeture du moule décrit dans la demande de brevet EP 0 242 840, les prolongements des coquilles puissent racler quelque peu la partie radialement interne des bourrelets du pneumatique. Dans certains cas, il se peut que, lors de cette phase où les prolongements des coquilles raclent le bourrelet encore cru, ils emportent une petite partie de caoutchouc qui va se trouver retirée de l'ébauche de pneumatique. Cette petite partie de caoutchouc est repoussée à l'intérieur du moule et est perdue. Elle encrasse le moule et/ou la presse, réduisant ainsi la durée de production possible entre deux nettoyages du moule et/ou de la presse. En outre, elle risque de provoquer des défauts d'aspect sur les pneumatiques cuits par la suite si cette petite partie de caoutchouc repoussée à l'intérieur du moule se libère et revient dans la cavité moulante.

Suivant un aspect de la présente invention, ce problème est résolu en réservant à la partie principale la totalité de la fonction de moulage, aucune surface de la partie d'accrochage n'ayant dans cette variante de réalisation de fonction de moulage. Dans ce cas, une face intermédiaire est disposée dans le prolongement direct, et radialement vers les plus petits rayons c'est à dire vers l'intérieur, de la surface de moulage du noyau. Cette face intermédiaire soit est disposée dans un plan perpendiculaire à l'axe de rotation, soit forme un tronc de cône d'angle très grand, selon la forme et l'orientation de la partie moulante. De cette façon, si la partie radialement la plus basse du bourrelet vient à un niveau radial plus faible que celui du pneumatique fini, la bavure que le mouvement de fermeture du moule pourrait provoquer est simplement pincée et non cisaillée, et reste accrochée au pneumatique. Cela évite les inconvénients décrits ci-dessus.

Aussi et de préférence, la ligne de jonction entre la partie d'accrochage et la partie principale est logée dans cette surface intermédiaire, ce qui fait que l'on évite également l'apparition de toute bavure sur la surface intérieure du bourrelet du pneumatique, due au fluage de caoutchouc entre partie d'accrochage et partie principale. Un autre avantage de cette disposition est que la partie d'accrochage, ou plus précisément l'ensemble des parties d'accrochage de l'ensemble des fractions, n'ont pas nécessairement à former une surface continue puisque ces parties d'accrochage ne sont pas moulantes.

Suivant un autre aspect, afin d'éviter l'apparition de bavures entre les fractions tout en permettant la construction d'un noyau de grande robustesse, résistant aux démontages et montages successifs, l'invention propose un noyau rigide définissant au moins partiellement une forme de fabrication pour la surface intérieure d'un pneumatique, le noyau comportant une pluralité de fractions adjacentes circonférentiellement, disposées côte à côte en contact les unes contre les autres par leurs faces transversales, lesdites faces transversales d'au moins une fraction étant convergentes radialement à l'extérieur du noyau, chacune desdites fractions comportant une partie d'accrochage à organe de solidarisation des différentes fractions, ladite partie d'accrochage étant agencée à l'extrémité radialement intérieure de chacune des fractions, ladite partie d'accrochage étant réalisée essentiellement en un premier matériau, ledit noyau comportant une partie principale solidaire de ladite partie d'accrochage, réalisée essentiellement en un second matériau différent du premier matériau, rendue solidaire de ladite partie d'accrochage, et dans lequel, en considérant l'ensemble des fractions, le dimensionnement et la configuration de la partie principale, de la partie d'accrochage, et de la liaison de la partie principale à la partie d'accrochage sont tels que, à la température de vulcanisation du caoutchouc, les parties principales sont en contact à jeu nul les unes contre les autres et présentent une surface de moulage régulière, sans ressaut entre fractions adjacentes, alors que, aux températures inférieures à la température de vulcanisation, des jeux apparaissent entre les parties principales.

Suivant un autre aspect encore, afin de favoriser les échanges thermiques, l'invention propose un noyau rigide définissant au moins partiellement une forme de fabrication pour la surface intérieure d'un pneumatique, le noyau comportant une pluralité de fractions adjacentes circonférentiellement, disposées côte à côte en contact les unes contre les autres par leurs faces transversales, lesdites faces transversales d'au moins une fraction étant convergentes radialement à l'extérieur du noyau, chacune desdites fractions comportant une partie d'accrochage à organe de solidarisation des différentes fractions, ladite partie d'accrochage étant agencée à l'extrémité radialement intérieure de chacune des fractions, ledit noyau comportant une partie principale solidaire de ladite partie d'accrochage, réalisée essentiellement en un matériau coulable et bon conducteur thermiquement, moulé avec au moins une résistance électrique par fraction, fixée de façon à favoriser la conduction thermique.

D'autres détails et avantages de l'invention sont expliqués dans la suite, à consulter en parallèle des figures jointes, sur lesquelles :
la figure 1 est une vue schématique, de côté, d'un noyau selon l'invention ;
la figure 2a est une coupe radiale schématique et partielle d'un tel noyau, associé à une coquille pour constituer une cavité de moulage, dans une configuration prise pendant le mouvement de fermeture du moule ;
la figure 2b est une coupe radiale schématique et partielle d'un tel noyau, associé à une coquille pour constituer une cavité de moulage, dans la configuration à la position de fermeture du moule ;
la figure 2c est une vue schématique, de côté, d'un noyau selon l'invention, dans une configuration qu'il pourrait prendre sous l'effet d'une élévation de pression pendant la vulcanisation, en l'absence de moyens de maintien appropriés ;
la figure 3 est une coupe radiale schématique et partielle d'une variante de réalisation d'un noyau selon l'invention, associé à une coquille pour constituer une cavité de moulage, dans la configuration à la position de fermeture du moule ;
la figure 4a est une vue schématique, de côté, d'un noyau selon l'invention, dans une configuration prise à une température inférieure à la température de vulcanisation ;
la figure 4b est une vue schématique, de côté, d'un noyau selon l'invention, dans une configuration prise à la température de vulcanisation ;
la figure Sa est une vue plus détaillée, de côté, d'une fraction selon l'invention ;
la figure 5b est une coupe radiale plus détaillée d'une telle fraction ;
la figure 6a est une coupe radiale illustrant un aspect de l'invention ;
la figure 6b est une vue de côté, correspondant à la réalisation de la figure 6a ;
la figure 6c est une coupe radiale illustrant une variante de réalisation du même aspect de l'invention ;
la figure 6d est une vue de côté, correspondant à la réalisation de la figure 6c ;
la figure 7 est une coupe radiale illustrant un autre aspect de l'invention ;
la figure 8 est une coupe radiale schématique et partielle d'une autre variante de réalisation d'un noyau selon l'invention, associé à une coquille, dans la configuration à la position de fermeture du moule.

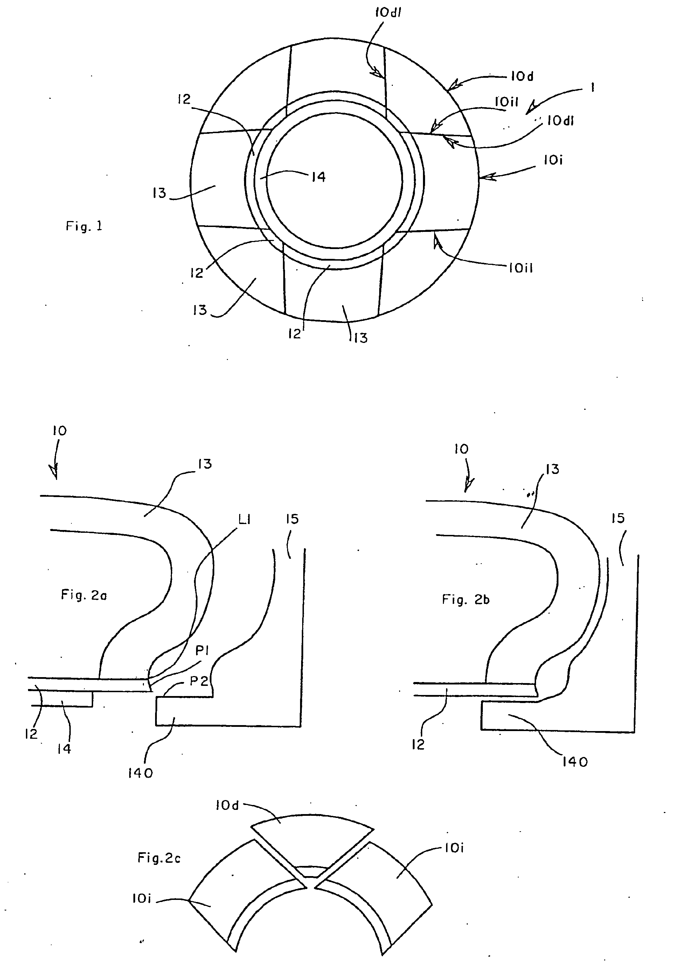

A la figure 1 et aux figures 2a et 2b, on voit un noyau rigide 1 selon le premier mode de réalisation. On voit une pluralité de fractions 10d, 10i adjacentes circonférentiellement, disposées côte à côte en contact les unes contre les autres par leurs faces transversales 10d1 et 10i1. Les faces transversales 10il d'au moins une fraction 10i sont convergentes à l'extérieur du noyau, afin de permettre le démontage dudit noyau en enlevant cette fraction radialement par l'intérieur. En pratique et comme dessiné dans la demande de brevet EP 0 242 840 ainsi que dans la présente demande, le noyau comporte deux modèles de fractions : des fractions divergentes 10d, dont les faces transversales 10dl sont divergentes à l'extérieur du noyau, et des fractions dits « inversées » 10i, dont les faces transversales 10il sont convergentes à l'extérieur du noyau. Dans la suite, les fractions seront désignées en omettant le suffixe i ou d, par exemple « fraction 10 », lorsque leur caractère divergent ou inversé est sans importance pour l'aspect technique traité.

Chacune desdites fractions 10 comporte une partie d'accrochage 12 à une jante 14, ladite partie d'accrochage 12 étant agencée à l'extrémité radialement intérieure de chacune des fractions. On voit à la figure 1 que la jante 14 est continue circonférentiellement. En revanche, les parties d'accrochage 12, puisqu'elles font partie des fractions 10, ne se développent chacune que sur une portion de cercle. Ladite partie d'accrochage 12 est réalisée essentiellement en un premier matériau choisi pour son aptitude à supporter un grand nombre de cycles de montage et de démontage. Chacune desdites fractions 10 comporte une partie principale 13 solidaire de ladite partie d'accrochage 12, dont la fonction essentielle est de définir une surface de fabrication pour le pneumatique. Cette partie principale 13 est réalisée essentiellement en un second matériau différent du premier matériau choisi pour son aptitude à être moulé, sa bonne conductibilité thermique et sa légèreté, rendue solidaire de ladite partie d'accrochage 12, c'est à dire non démontable fonctionnellement.

A la figure 2b, on voit une coquille 15 qui coopère avec le noyau 1 pour définir une cavité de moulage. Il y a bien entendu une coquille pour chaque flanc et par ailleurs des moyens (non représentés) pour mouler la bande de roulement. La coquille 15 assurant le moulage de la surface extérieure d'un flanc d'un pneumatique comporte, dans sa partie radialement intérieure, un prolongement 140 qui se glisse sous la surface radialement interne du noyau. Cela permet d'isoler et fermer complètement l'espace de moulage avant que chaque coquille n'ait atteint sa position de fermeture. C'est la voie de réalisation la plus compacte de la présente invention. Dans ce cas, on voit que les parties d'accrochage 12 ont une contribution au moulage du pneumatique, puisque la ligne L1 séparant la partie d'accrochage 12 de la partie principale 13 est dans la cavité de moulage du pneumatique.

On comprend que, sous l'effet d'une élévation de pression du pneumatique au cours de sa cuisson (due à la dilatation du caoutchouc) dans la cavité de moulage telle que définie ci-dessus et en l'absence de moyens de maintien appropriés, les fractions divergentes 10d sont incapables par elles-mêmes d'empêcher les fractions inversées 10i de faire protrusion vers l'intérieur (voir figure 2c). En effet, ces fractions inversées sont précisément conçues pour pouvoir être enlevés par l'intérieur d'un pneumatique vulcanisé sans que les fractions divergentes n'empêchent le mouvement radial nécessaire. C'est aussi le rôle des prolongements 140, qui de part et d'autre axialement (un seul côté est dessiné à la figure 2b) se glissent sous la surface radialement interne de l'ensemble des fractions 10, que d'empêcher lesdits fractions inversées 10i de faire protrusion vers l'intérieur sous l'effet d'une élévation de pression du pneumatique au cours de sa cuisson. En raison dudit glissement, cette partie des fractions en contact avec glissement sur les prolongements 140 fait aussi partie de la partie d'accrochage 12, afin d'assurer une grande robustesse du noyau. Il faut noter que, aux différentes figures, les jeux radiaux respectifs entre le prolongement 140 et la partie d'accrochage 12 ainsi qu'entre la jante et la partie d'accrochage sont exagérés et/ou de proportions non respectées.

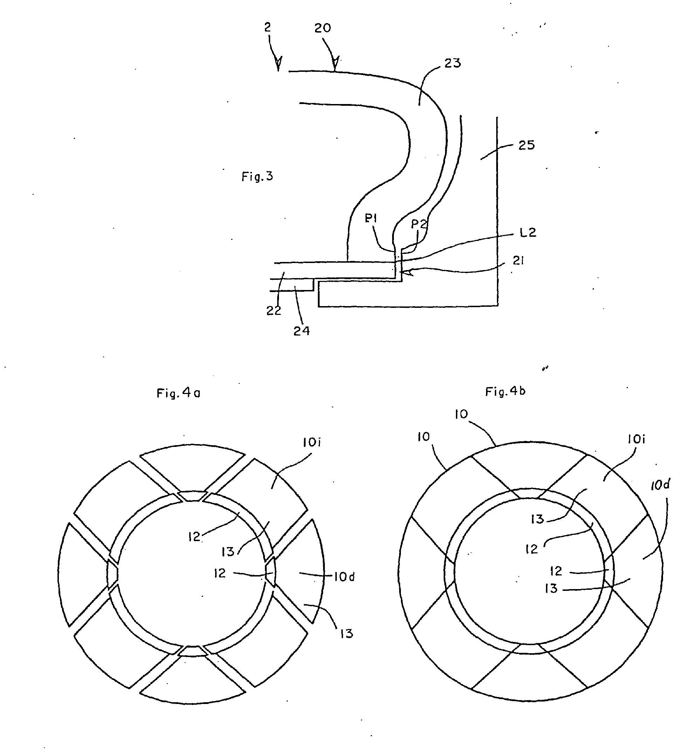

A la figure 3, on voit un noyau 2 conforme à deuxième mode de réalisation de l'invention. On reconnaît une fraction 20 ayant une partie d'accrochage 22 et une partie principale 13, la partie d'accrochage 22 étant montée sur une jante 24. Le noyau 2 coopère avec une coquille 25 (une coquille pour chaque flanc) pour définir une cavité de moulage. On voit une face intermédiaire 21 disposée dans le prolongement direct de la surface de moulage sur la fraction 20, et radialement vers l'intérieur. Cette face intermédiaire 21 est située radialement sous la partie moulante de la fraction 20, et soit est disposée dans un plan perpendiculaire à l'axe de rotation (comme illustré), soit forme un cône d'angle très grand, très ouvert. De cette façon, au cours du mouvement de fermeture du moule autour d'une ébauche crue d'un pneumatique, si du caoutchouc cru vient à être repoussé par le prolongement 140 en amorçant ainsi la création d'une bavure, elle va être pincée entre les points P1 et P2 et non cisaillée comme entre les points P1 et P2 à la figure 2a. Une bavure pincée reste naturellement accrochée au pneumatique.

Aussi et de préférence, la ligne de jonction L2 entre la partie d'accrochage 22 et la partie principale 23 est logée dans cette surface intermédiaire 21, ce qui fait que l'on évite également l'apparition de toute bavure sur la surface intérieure du bourrelet du pneumatique, due au fluage de caoutchouc entre partie d'accrochage et partie principale.

Notons encore qu'il importe que, lors de l'utilisation du noyau pendant la vulcanisation d'un pneumatique, il n'y ait qu'un jeu très faible entre chacune des fractions, de façon à éviter l'apparition de bavures de moulage trop importantes. Par ailleurs, il convient qu'un tel noyau, qui comporte des pièces de coefficients de dilatation thermique différents (acier pour la partie d'accrochage et aluminium pour la partie principale), s'accommode des cycles thermiques provoqués par la fabrication d'un pneumatique. Un tel noyau sera utilisé à des températures de l'ordre de 150°C au moins lors de la vulcanisation alors que lors de la fabrication de l'ébauche crue de pneumatique, il est utilisé à des températures inférieures à 100°C. Afin de s'accommoder à ces cycles thermiques, il est prévu (voir figures 4a et 4b) que le dimensionnement de la partie principale 13 et sa liaison à sa partie d'accrochage 12 soit tels que, lors de l'utilisation du noyau pendant l'assemblage d'un pneumatique cru, il subsiste des jeux (figure 4a, à une température inférieure à la température de vulcanisation où, là aussi, les jeux entre les fractions 10 sont exagérés) entre chacune des fractions 10i et 10d qui ne se referment que lors de l'élévation de température nécessaire à la vulcanisation (figure 4b, à la température de vulcanisation). Cela évite que les fractions divergentes 10i ne soient expulsés radialement vers l'extérieur sous l'effet de l'augmentation de périmètre des parties principales, due elle même à la dilatation thermique. Corrélativement, cela évite de dégrader les moyens de liaison (les parties d'accrochage et la jante) des fractions 10 entre elles.

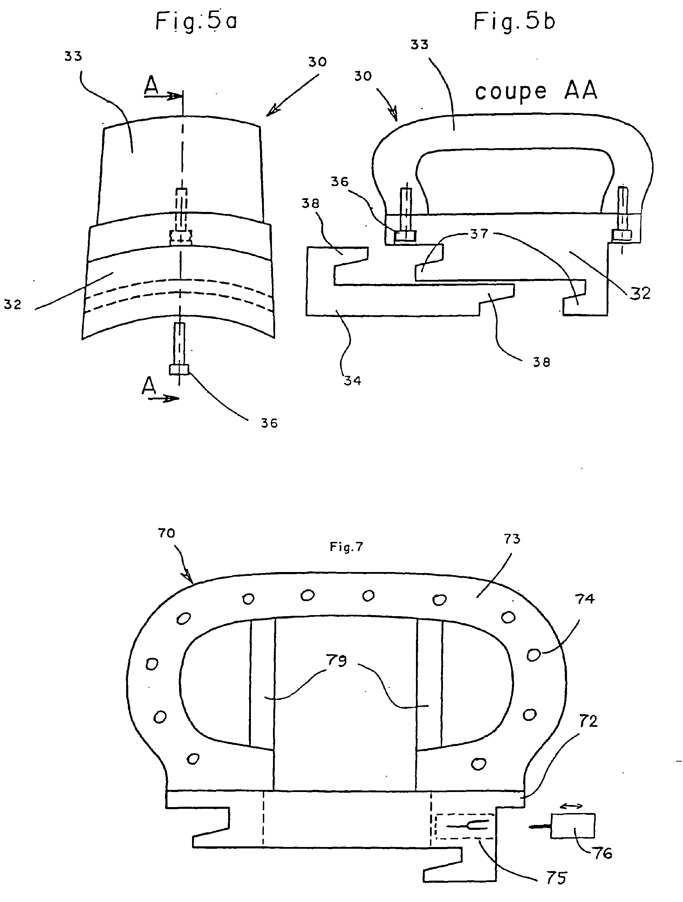

Dans tous les modes de réalisation, on a vu qu'une fraction 10, 20 comporte toujours une partie d'accrochage 12, 22 disposée radialement à la partie intérieure de celui-ci. Il comporte une partie principale 13, 23 réalisée en alliage léger moulé. On voit aux figures 5a et 5b une partie principale 33 fixé à une partie d'accrochage 32 au moyen de vis 36 disposées latéralement de part et d'autre de la fraction 30, et circonférentiellement sensiblement dans la partie médiane de la fraction. Une telle liaison entre partie d'accrochage 32 et partie principale 33, puisqu'elle est essentiellement centrale, va permettre à la partie principale de subir des dilatations plus importantes que la partie d'accrochage sans qu'il n'en résulte aucun dommage ni à la partie d'accrochage 32 ni à la partie principale 33 ni aux vis 36 de liaison entre partie d'accrochage et partie principale.

On comprend que les portées d'accrochage sont fortement sollicitées à chaque montage et à chaque démontage du noyau. Cette partie est très résistante de par le choix d'un matériau adapté. En outre, on peut précisément prévoir tous les traitements de surface convenables pour assurer la bonne tenue dans le temps de cette zone qui subit beaucoup de chocs, de martèlements et de frottements lors de chaque cycle de montage et de démontage du noyau.

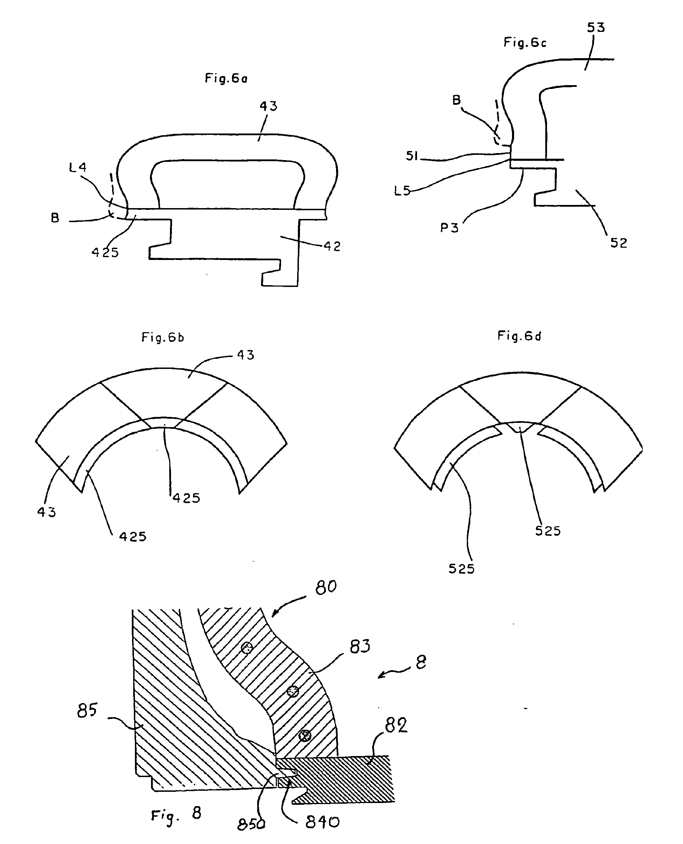

Examinons une autre différence possible selon que la partie d'accrochage est moulante (figures 6a et 6b), ou ne l'est pas (figures 6c, 6d, 6e). A la figure 6a, on voit que la zone 425 de la partie d'accrochage 42 se prolonge radialement en face du bourrelet B, de sorte que la ligne de jonction L4 séparant partie d'accrochage 42 et partie principale 43 apparaît à la surface intérieure du bourrelet B du pneumatique. Dans ce cas, il est bien entendu nécessaire que, circonférentiellement, l'ensemble des parties d'accrochage forme au moins dans la partie moulant le pneumatique une surface continue (voir figure 6b). Ce n'est pas nécessairement le cas lorsque la surface de moulage est entièrement située sur les parties principales 53 (voir figure 6d). A la figure 6c, on voit que la ligne de jonction L5 séparant partie d'accrochage 52 et partie principale 53 apparaîtrait dans la surface intermédiaire 51. La face interne du bourrelet B du pneumatique est entièrement moulée par la partie principale 53. Dans ce cas, il peut être avantageux que la face P3, qui à la figure 6c est cylindrique, soit légèrement tronconique.

A la figure 7, on voit un détail de réalisation d'une partie principale d'une fraction 70 très large. La partie principale 73 est renforcée dans sa partie centrale par des poteaux 79 disposés sensiblement radialement qui relient la partie inférieure de cette partie principale à la voûte située radialement le plus à l'extérieur.

On a vu que l'on utilise typiquement un métal comme l'acier pour réaliser la partie d'accrochage. L'acier est usiné de façon à obtenir toutes les portées et les formes voulues pour cette partie d'accrochage en fonction des finalités d'accrochage et de manipulations du noyau. On a vu que l'on utilise typiquement un alliage léger coulé comme un alliage d'aluminium pour la partie principale. Cela permet de surmouler -c'est à dire de noyer- des résistances électriques à l'intérieur de la paroi formant le dôme radialement extérieur de chaque partie principale.

On voit à la figure 7 une résistance électrique 74, la coupe radiale révélant douze coupes de cette résistance 74 qui est cintrée de façon à former des allers et retours de tronçons orientés circonférentiellement. On utilise donc un matériau coulable et bon conducteur thermiquement, moulé avec au moins une résistance électrique par fraction, noyée à l'intérieur de la paroi formant le dôme radialement extérieur de chaque partie principale. En variante, on pourrait aussi fixer les résistances dans un logement usiné ou les fixer sur la face intérieure de ladite paroi, d'une façon appropriée pour favoriser la conduction thermique. Comme le noyau doit pouvoir être transporté de poste en poste sur une machine de fabrication de pneumatiques, on prévoit soit un connecteur 75 qui permette, lors de l'accostage à un préhenseur sur un poste de vulcanisation, de raccorder le noyau par un autre connecteur 76 au poste de vulcanisation de la machine pour alimenter les résistances en énergie électrique et éventuellement pour pouvoir connecter des sondes de mesures diverses, soit on prévoit dans le même but des moyens de couplage inductif et/ou tout autre moyen de couplage usuel.

Aux figures 5b et 7, on voit une variante de réalisation intéressante comportant une jante 34 continue circonférentiellement, le noyau comportant au moins une portée d'accrochage côté fraction, agencée sur la partie d'accrochage de chacune des fractions, par exemple sur un bec 37 agencé circonférentiellement. Le noyau comporte aussi une portée d'accrochage côté jante, complémentaire à la portée d'accrochage côté fraction, agencée sur la jante et coopérant, pour chaque fraction, avec la portée d'accrochage côté fraction pour reprendre les efforts tendant à séparer radialement les fractions par rapport à la jante, en coopération avec des moyens de blocage non représentés, par exemple des moyens pour pincer axialement la jante 34 contre la partie d'accrochage 32. Dans l'exemple illustré, chaque portée d'accrochage côté jante est aussi réalisée sur un bec 38 agencé circonférentiellement.

Avantageusement, lesdites portée d'accrochage côté fraction et portée d'accrochage côté jante sont conformées de façon à permettre un mouvement axial relatif de la jante par rapport à l'ensemble des fractions dans un sens seulement. Ceci est possible par exemple en prévoyant que les becs 37 sur les fractions soient situés à des niveaux différents, l'un, dit bec inférieur, étant disposé radialement à un niveau inférieur à l'autre, dit bec supérieur. De même pour les becs 38 de la jante 34. On voit aussi dans cet exemple que chaque portée d'accrochage est une surface tronconique, lesdites surfaces tronconiques étant orientées axialement du même côté du noyau. Plus particulièrement, chaque surface tronconique est d'angle non coinçant.

Finalement, à la figure 8, on reconnaît une fraction 80 ayant une partie d'accrochage 82 et une partie principale 83. Le noyau 8 coopère avec une coquille 85 (une coquille pour chaque flanc) pour définir une cavité de moulage. Cette variante montre une rainure 840 aménagée sur chaque partie d'accrochage 82, pour coopérer avec une nervure 850 aménagée sur la coquille 85, de façon à éviter tout risque que les fractions inversées fasse protubérance par rapport aux fractions divergentes.

## Revendications

1. Noyau rigide définissant au moins partiellement une forme de fabrication et de moulage pour la surface intérieure d'un pneumatique, le noyau comportant une pluralité de fractions (10, 20, 30, 70) adjacentes circonférentiellement, disposées côte à côte en contact les unes contre les autres par leurs faces transversales, chacune desdites fractions comportant une partie d'accrochage (12, 22, 32, 72) à un organe de solidarisation (14, 34) des différentes fractions, ladite partie d'accrochage étant agencée à l'extrémité radialement intérieure de chacune des fractions, tel que lesdites faces transversales d'au moins une fraction (10i) sont convergentes radialement à l'extérieur du noyau, ledit noyau comportant une partie principale (13, 23, 33, 73) solidaire de ladite partie d'accrochage, ladite partie principale étant réalisée essentiellement en un matériau coulable et bon conducteur thermiquement, moulé avec au moins une résistance électrique (74) par fraction, fixée de façon à favoriser la conduction thermique, **caractérisé en ce que** la résistance électrique (74) est noyée à l'intérieur de la paroi formant le dôme radialement extérieur de chaque partie principale.

2. Noyau selon la revendication 1, dans lequel est implanté un connecteur (75) qui permet, lors de l'accostage par un préhenseur au poste de vulcanisation, de raccorder le noyau au poste de vulcanisation de la machine pour alimenter les résistances en énergie électrique et éventuellement pour pouvoir connecter des sondes de mesures diverses.

3. Noyau selon la revendication 1, dans lequel sont implantés des moyens de couplage inductif permettant, lors de l'accostage par un préhenseur au poste de vulcanisation, de raccorder le noyau au poste de vulcanisation de la machine pour alimenter les résistances en énergie électrique et éventuellement pour pouvoir connecter des sondes de mesures diverses.

4. Noyau selon l'une des revendications 1 à 3, dans lequel la partie d'accrochage (12, 22, 32) est réalisée en acier et la partie principale (13, 23, 33) est réalisée en alliage d'aluminium.

5. Noyau selon l'une des revendications 1 à 4 dans lequel, en considérant l'ensemble des fractions (10, 20, 30), le dimensionnement et la configuration de la partie principale (13, 23, 33), de la partie d'accrochage (12, 22, 32), et de la liaison de la partie principale à la partie d'accrochage sont tels que, à la température de vulcanisation du caoutchouc, les parties principales sont en contact à jeu nul les unes contre les autres et présentent une surface de moulage régulière, sans ressaut entre fractions adjacentes, alors que, aux températures inférieures à la température de vulcanisation, des jeux apparaissent entre les parties principales.

6. Noyau selon l'une des revendications 1 à 5, dans lequel l'organe de solidarisation des différentes fractions est une jante (14, 24, 34) continue circonférentiellement.

7. Noyau selon l'une des revendications 1 à 6, comportant :
• au moins une portée d'accrochage côté fraction, agencée sur la partie d'accrochage (32) de chacune des fractions (30),
• une portée d'accrochage côté jante, complémentaire à la portée d'accrochage côté fraction, agencée sur la jante (34) et coopérant, pour chaque fraction (30), avec la portée d'accrochage côté fraction pour reprendre les efforts tendant à séparer radialement les fractions (30) par rapport à la jante (34).

8. Noyau selon la revendication 7, dans lequel lesdites portée d'accrochage côté fraction (30) et portée d'accrochage côté jante (34) sont conformées de façon à permettre un mouvement axial relatif de la jante par rapport à l'ensemble des fractions dans un sens seulement.

9. Noyau selon l'une des revendications 7 ou 8, dans lequel lesdites portée d'accrochage côté fraction et portée d'accrochage côté jante sont chacune situées sur un bec (37, 38) agencé circonférentiellement.

10. Noyau selon la revendication 9, dans lequel chaque fraction comporte deux becs (37-37, 38-38) agencés circonférentiellement, l'un, dit bec inférieur, étant disposé radialement à un niveau inférieur à l'autre, dit bec supérieur.

11. Noyau selon la revendication 10, dans lequel chaque portée d'accrochage est une surface tronconique, lesdites surfaces tronconiques étant orientées axialement du même côté du noyau.

12. Noyau selon la revendication 11, dans lequel chaque portée d'accrochage est une surface tronconique d'angle non coinçant, lesdites surfaces tronconiques étant orientées axialement du même côté du noyau.

## Claims

1. Rigid core at least partially defining a manufacturing form for the internal surface of a tyre, the core comprising a plurality of circumferentially adjacent fractions (10, 20, 30) disposed side by side in contact with one another by their transverse faces (10d1, 10i1), said transverse faces of at least one fraction (10i) converging radially to the exterior of the core, each of said fractions comprising a portion (12, 22, 32) for attachment to a member for integrally connecting the various fractions, said attachment portion being arranged at the radially internal end of each of the fractions, said attachment portion being produced essentially from a first material, said core comprising a main portion (13, 23, 33) which is integrally connected to said attachment portion (12, 22, 32), produced essentially from a second material different from the first material, integrally connected to said attachment portion, **characterised in that**, considering all the fractions (10, 20, 30), the dimensioning and configuration of the main portion (13, 23, 33), of the attachment portion (12, 22, 32) and of the connection between the main portion and the attachment portion are such that, at the vulcanisation temperature of the rubber, the main portions are in contact with one another with zero clearance and have a uniform moulding surface, without a projection between adjacent fractions, whereas, at temperatures lower than the vulcanisation temperature, clearances appear between the main portions.

2. Core according to claim 1, in which the member for integrally connecting the various fractions is a circumferentially continuous rim (14, 24, 34).

3. Core according to one of claims 1 to 2, comprising:
• at least one fraction-side attachment bearing surface, arranged on the attachment portion (32) of each of the fractions (30),
• a rim-side attachment bearing surface, complementary with the fraction-side attachment bearing surface, arranged on the rim (34) and cooperating, for each fraction (30), with the fraction-side attachment bearing surface in order to absorb the stresses tending radially to separate the fractions (30) relative to the rim (34).

4. Core according to claim 3, in which said fraction-side attachment bearing surface (30) and rim-side attachment bearing surface (34) are shaped so as to allow an axial movement of the rim relative to all of the fractions in a single direction.

5. Core according to one of claims 3 or 4, in which said fraction-side attachment bearing surface and rim-side attachment bearing surface are each located on a circumferentially arranged nose (37, 38).

6. Core according to claim 5, in which each fraction comprises two circumferentially arranged noses (37-37, 38-38) one nose, the so-called lower nose, being disposed radially at a lower level than the other nose, the so-called upper nose.

7. Core according to claim 6, in which each attachment bearing surface is a frustoconical surface, said frustoconical surfaces being orientated axially on the same side of the core.

8. Core according to claim 7, in which each attachment bearing surface is a frustoconical surface with a non-wedging angle, said frustoconical surfaces being orientated axially on the same side of the core.

9. Core according to one of claims 1 to 8, in which the main portion (13, 23, 33, 73) integrally connected to said attachment portion is produced essentially from a flowable material which is a good conductor of heat and is moulded with at least one electrical resistor (74) per fraction, fixed so as to promote the conduction of heat.

10. Core according to claim 9, in which the electrical resistor (74) is immersed within the wall forming the radially external dome of each main portion.

11. Core according to claim 9 or 10, in which a connector (75) is implanted which, as a gripper approaches the vulcanisation station, allows the core to be coupled to the vulcanisation station of the machine in order to supply the resistors with electricity and optionally to enable various measuring probes to be connected.

12. Core according to claim 9 or 10, in which inductive coupling means are implanted, which, as a gripper approaches the vulcanisation station, allow the core to be coupled to the vulcanisation station of the machine in order to supply the resistors with electricity and optionally to enable various measuring probes to be connected.

## Patentansprüche

1. Steifer Kern, der zumindest zum Teil eine Form für die Herstellung und das Formen der inneren Oberfläche eines Luftreifens definiert, wobei der Kern eine Vielzahl von in Umfangsrichtung aneinander angrenzenden Abschnitten (10, 20, 30, 70) aufweist, die über ihre transversalen Seiten in Kontakt miteinander nebeneinander angeordnet sind, wobei jeder Abschnitt einen Verankerungsbereich (12, 22, 32, 72) an einem Element (14, 34) zur festen Verbindung der verschiedenen Abschnitte aufweist, wobei der Verankerungsbereich am radial inneren Ende jedes Abschnitts angeordnet ist, derart, dass die transversalen Seiten mindestens eines Abschnitts (10i) radial außerhalb des Kerns konvergieren, wobei der Kern einen Hauptbereich (13, 23, 33, 73) aufweist, der fest mit dem Verankerungsbereich verbunden ist, wobei der Hauptbereich im Wesentlichen aus einem gießbaren Material mit guter thermische Leitfähigkeit realisiert ist, der mit mindestens einem elektrischen Widerstand (74) pro Abschnitt geformt ist, welcher so befestigt ist, dass die thermische Leitfähigkeit besser wird, **dadurch gekennzeichnet, dass** der elektrische Widerstand (74) im Inneren der Wand eingebettet ist, die die radial äußere Kuppel jedes Hauptbereichs bildet.

2. Kern nach Anspruch 1, in den ein Anschlussstecker (75) eingesetzt ist, mit dem, beim Zusammenführen mit einem Greifer an der Vulkanisationsstation, der Kern mit der Vulkanisationsstation der Maschine verbunden werden kann, um die Widerstände mit Elektrizität zu versorgen und gegebenenfalls verschiedene Messsonden anschließen zu können.

3. Kern nach Anspruch 1, in den induktive Kopplungsmittel eingesetzt sind, mit denen, beim Zusammenführen mit einem Greifer an der Vulkanisationsstation, der Kern mit der Vulkanisationsstation der Maschine verbunden werden kann, um die Widerstände mit Elektrizität zu versorgen und gegebenenfalls verschiedene Messsonden anschließen zu können.

4. Kern nach einem der Ansprüche 1 bis 3, wobei der Verankerungsbereich (12, 22, 32) aus Stahl besteht und der Hauptbereich (13, 23, 33) aus einer Aluminiumlegierung realisiert ist.

5. Kern nach einem der Ansprüche 1 bis 4, bei dem, unter Berücksichtigung der gesamten Abschnitte (10, 20, 30), die Dimensionierung und Konfiguration des Hauptbereichs (13, 23, 33), des Verankerungsbereichs (12, 22, 32) und der Verbindung des Hauptbereichs mit dem Verankerungsbereich so sind, dass bei der Vulkanisationstemperatur des Kautschuks die Hauptbereiche ohne Abstand miteinander in Kontakt sind und ohne Stoßstufe zwischen den angrenzenden Abschnitten eine regelmäßige Formoberfläche bilden, während bei Temperaturen unter der Vulkanisationstemperatur zwischen den Hauptbereichen Abstände auftreten.

6. Kern nach einem der Ansprüche 1 bis 5, bei dem das Element zur formschlüssigen Verbindung der verschiedenen Abschnitte eine in Umfangsrichtung kontinuierliche Felge (14, 24, 34) ist.

7. Kern nach einem der Ansprüche 1 bis 6, der aufweist:
• mindestens einen Zapfen zur Verankerung auf der Seite des Abschnitts, der an dem Verankerungsbereich (32) jedes Abschnitts (30) angebracht ist,
• mindestens einen Zepfen zur Verankerung auf der Seite der Felge, der zu dem Zapfen zur Verankerung auf der Seite des Abschnitts komplementär ist, an der Felge (34) angebracht ist und bei jedem Abschnitt (30) mit dem Zapfen zur Verankerung auf der Seite des Abschnitts zusammenwirkt, um die Kräfte aufzunehmen, die dazu beitragen, die Abschnitte (30) in Bezug auf die Felge (34) in radialer Richtung zu separieren.

8. Kern nach Anspruch 7, bei dem der Zapfen zur Verankerung auf der Seite des Abschnitts (30) und der Zapfen zur Verankerung auf der Seite der Felge (34) so angepasst sind, dass in Bezug auf alle Abschnitten eine relative axiale Bewegung der Felge in nur einer Richtung möglich ist.

9. Kern nach einem der Ansprüche 7 oder 8, bei dem der Zapfen zur Verankerung auf der Seite des Abschnitts und der Zapfen zur Verankerung auf der Seite der Felge sich jeweils an einer Spitze (37, 38) befinden, die in Umfangsrichtung angeordnet ist.

10. Kern nach Anspruch 9, bei dem jeder Abschnitt zwei Spitzen (37-37, 38-38) aufweist, die in Umfangsrichtung angeordnet sind, wobei eine Spitze, die so genannte untere Spitze, radial unterhalb der anderen Spitze, der so genannten oberen Spitze, angeordnet ist.

11. Kern nach Anspruch 10, bei dem jeder Zapfen zur Verankerung eine kegelförmige Fläche ist, wobei die kegelförmigen Flächen axial auf der gleichen Seite des Kerns ausgerichtet sind.

12. Kern nach Anspruch 11, bei dem jeder Zapfen zur Verankerung eine kegelförmig Fläche mit einem nicht klemmenden Winkel ist, wobei die kegelförmigen Flächen axial auf der gleichen Seite des Kerns ausgerichtet sind.
